# EUROPEAN PATENT APPLICATION

(11) **EP 3 162 832 A1**
(43) Date of publication of application: **03.05.2017**
(21) Application number: 15812572.4
(22) Date of filing: 19.06.2015
(51) Int. Cl.: C08G 61/08

(54) **GELLING PROMOTER**

(30) Priority: 27.06.2014 JP 2014132009
(71) Applicant: Rimtec Corporation, Chiyoda-ku Tokyo 100-0005 (JP)
(72) Inventor: KAMADA, Michiru, Chiyoda-ku, Tokyo 100-0005 (JP)
(74) Representative: Beckmann, Claus
(86) International application number: PCT/JP2015/067757
(87) International publication number: WO 2015/198992

(57) **Abstract**

The present invention relates to a gelation promoting agent when polymerizing a norbornene-based monomer in the presence of a metathesis polymerization catalyst, the gelation promoting agent obtained by mixing an activator of the metathesis polymerization catalyst and a norbornene-based monomer, wherein the gelation promoting agent consists essentially of a mixture of only two components of the activator and the above norbornene-based monomer; and a liquid formulation for reaction injection molding containing the gelation promoting agent. The gelation promoting agent of the present invention is added to a liquid formulation for reaction injection molding, thereby exhibiting effects that the gelation when the liquid formulation contacts a catalyst can be shortened. The liquid formulation for reaction injection molding of the present invention containing a gelation promoting agent is used as the liquid formulation for RIM method, thereby giving a molded article exhibiting effects that high mechanical strength is maintained and surface conditions are excellent can be manufactured, and effects that residual resins on a mold used can be reduced. The reaction injection-molded article of the present invention exhibits effects that high mechanical strength is maintained, and the surface conditions are excellent.

## Description

### TECHNICAL FIELD

The present invention relates to a gelation promoting agent used in reaction injection molding and a liquid formulation for reaction injection molding. Further, the present invention relates to a method for manufacturing a reaction injection-molded article using the gelation promoting agent or the liquid formulation for reaction injection molding. Further, the present invention relates to a reaction injection-molded article manufactured by the method for manufacturing a reaction injection-molded article.

### BACKGROUND ART

Conventionally, a method called a reaction injection molding method (RIM method), including injecting a liquid reaction mixture containing a norbornene-based monomer and a metathesis polymerization catalyst in a mold, and carrying out a bulk ring-opening polymerization of the liquid reaction mixture to manufacture a resin molded article (reaction injection-molded article) made of a norbornene-based resin has been known.

For example, Patent Publication 1 discloses a technique including carrying out a bulk ring-opening polymerization of a norbornene-based monomer-containing liquid formulation for reaction injection molding containing a specified elastomer according to RIM method, thereby giving a resin molded article with reduced sink marks on the surface of the molded article irrespective of shapes, sizes and the like of the mold.

In addition, Patent Publication 2 discloses a method for manufacturing a resin molded article including carrying out a bulk ring-opening polymerization of a novel metathesis polymerizable monomer containing a specified amount of an exo-dicyclopentadiene according to RIM method, thereby giving a sufficiently cured cross-linked polymer molded article having a low residual ratio of monomer. Also, Patent Publication 2 describes that if an ether compound is added to a reactive solution used in the manufacture of a resin molded article, storage stability can be improved.

### PRIOR ART REFERENCES

### PATENT PUBLICATIONS

Patent Publication 1: Japanese Patent Laid-Open No. 2008-163105
Patent Publication 2: Japanese Patent Laid-Open No. 2003-25364

### SUMMARY OF THE INVENTION

### PROBLEMS TO BE SOLVED BY THE INVENTION

As a result of studies on the inventions disclosed in the above Patent Publications 1 and 2 with the aim of the development of improvement techniques of surface conditions of the resin molded articles obtained according to RIM method, the present inventor has clarified that residual resins on surface of the mold upon mold release, tackiness on the core side, residual bubbles on the side of manufactured articles, and the like are caused, which may lead to roughened surface conditions of the resin molded articles obtained in some cases, and as its reason the time required for gelation of the reactive liquid mixture obtained by mixing needed liquid formulations (which may be hereinafter referred to as "gelation time") becomes longer, which may make the gelation insufficient in some cases.

Therefore, an object of the present invention is to provide a gelation promoting agent, a liquid formulation for reaction injection molding, a method for manufacturing a reaction injection-molded article without failure in external appearance of the surface and having high excellent strength using the gelation promoting agent, and the molded article. Here, without failure in external appearance of the surface refers to an excellent surface of the molded article without causing residual resins on the surface of the mold upon mold release or causing residual bubbles of the side of the manufactured article.

### MEANS TO SOLVE THE PROBLEMS

Specifically, the gist of the present invention relates to:
[1] a gelation promoting agent for promoting gelation due to polymerization of a norbornene-based monomer in the presence of a metathesis polymerization catalyst including tungsten as a center metal, wherein the gelation promoting agent consists essentially of a mixture of only two components of an activator of the above catalyst and a norbornene-based monomer;
[2] a liquid formulation for reaction injection molding for polymerizing a norbornene-based monomer in the presence of a metathesis polymerization catalyst including tungsten as a center metal, wherein the liquid formulation for reaction injection molding contains a gelation promoting agent as defined in the above [1];
[3] a method for manufacturing a reaction injection-molded article, including the step of subjecting a reactive liquid mixture obtained by mixing a liquid formulation for reaction injection molding as defined in the above [2], with a liquid formulation containing a metathesis polymerization catalyst including tungsten as a center metal to bulk polymerization in a mold, thereby carrying out reaction injection molding;
[4] a method for manufacturing a reaction injection-molded article, including the step of subjecting a reactive liquid mixture obtained by concurrently mixing
   a liquid formulation A containing a norbornene-based monomer and a reaction modulator,
   a liquid formulation B containing a metathesis polymerization catalyst including tungsten as a center metal, and
   a gelation promoting agent as defined in the above [1] to bulk polymerization in a mold, thereby carrying out reaction injection molding; and
[5] a reaction injection-molded article obtained by the method as defined in the above [4].

### EFFECTS OF THE INVENTION

The gelation promoting agent of the present invention is added to a liquid formulation for reaction injection molding, thereby exhibiting an effect that the gelation when the liquid formulation for reaction injection molding contacts a catalyst can be shortened. The liquid formulation for reaction injection molding of the present invention containing a gelation promoting agent is used as the liquid formulation for RIM method, thereby giving a molded article exhibiting some effects that high mechanical strength is maintained and surface conditions are excellent, and some effects that residual resins on a mold used can be reduced. The reaction injection-molded article of the present invention exhibits some effects that high mechanical strength is maintained, and the surface conditions are excellent.

### MODES FOR CARRYING OUT THE INVENTION

According to RIM method, in general, a liquid formulation 1 containing an activator of a metathesis polymerization catalyst and a metathesis polymerizable monomer, and a liquid formulation 2 containing a metathesis polymerization catalyst and a metathesis polymerizable monomer are used in combination, and those liquid formulations are usually prepared by mixing each of an activator and a metathesis polymerization catalyst in separate metathesis polymerizable monomer solutions. However, as a result of intensive studies on the componential compositions of the liquid formulation used in reaction injection molding, and preparation methods thereof, surprisingly, the present inventor has newly found that when a liquid formulation 1 is prepared through the step of mixing only the two components, i.e. the activator and the norbornene-based monomer, a reactive liquid mixture obtained by mixing the above liquid formulation 1 with a liquid formulation 2 composed of a metathesis polymerization catalyst and a norbornene-based monomer, would undesirably dilute the effects by a reaction modulator even if the reaction modulator of the above catalyst is blended with the liquid mixture, so that the gelation time would be abnormally faster. Further, as a result of the development of studies, in the reaction injection molding in which a norbornene-based monomer is polymerized in the presence of a metathesis polymerization catalyst including tungsten as a center metal, it can be seen that the composition obtained by mixing only the two components of the activator of the catalyst and the monomer has an action of shortening the gelation time of a reactive liquid mixture. Based on the above findings, the gelation promoting agent of the present invention is now perfected. According to the gelation promoting agent of the present invention, for example, when a gelation promoting agent is added in a small amount to a conventional liquid formulation 1, the gelation time can be controlled, such that the gelation time of a reactive liquid mixture obtained can be shortened to a desired level. Moreover, the surface conditions of a resin molded article obtained by subjecting the reactive liquid mixture to a bulk polymerization in a mold can be advantageously improved.

The present invention will be explained in detail hereinbelow under the sections of 1) components used in the present invention, 2) a gelation promoting agent, 3) a liquid formulation for reaction injection molding, 4) a reactive liquid mixture, 5) a method for manufacturing a reaction injection-molded article, and 6) a reaction injection-molded article.

### 1) Components Used in the Present Invention

### (a) Norbornene-Based Monomer

The norbornene-based monomer is a compound having a norbornene structure represented by formula (2):

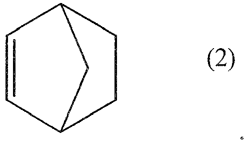

The norbornene-based monomer (which may be hereinafter referred to as a "monomer (a)") includes norbornene-based monomers that do not have a ring that condenses with a norbornene ring in the molecule; tricyclic or higher polycyclic norbornene-based monomers; and the like. The monomer (a) can be used alone or in a mixture of two or more kinds.

Specific examples of the norbornene-based monomers that do not have a ring that condenses with a norbornene ring in the molecule include norbornenes that are unsubstituted or have an alkyl group, such as norbornene, 5-methylnorbornene, 5-ethylnorbornene, 5-butylnorbornene, 5-hexylnorbornene, 5-decylnorbornene, 5-cyclohexylnorbornene, and 5-cyclopentylnorbornene; norbornenes having an alkenyl group, such as 5-ethylidenenorbornene, 5-vinylnorbornene, 5-propenylnorbornene, 5-cyclohexenylnorbornene, and 5-cyclopentenylnorbornene; norbornenes having an aromatic ring, such as 5-phenylnorbornene; norbornenes having a polar group including an oxygen atom, such as 5-methoxycarbonylnorbornene, 5-ethoxycarbonylnorbornene, 5-methyl-5-methoxycarbonylnorbornene, 5-methyl-5-ethoxycarbonylnorbornene, norbonenyl-2-methylpropionate, norbornenyl-2-methyloctanate, 5-hydroxymethylnorbornene, 5,6-di(hydroxymethyl)norbornene, 5,5-di(hydroxymethyl)norbornene, 5-hydroxy-i-propylnorbornene, 5,6-dicarboxynorbornene, and 5-methoxycarbonyl-6-carboxynorbornene; norbornenes having a polar group including a nitrogen atom, such as 5-cyanonorbornene, and the like.

The tricyclic or higher polycyclic norbornene-based monomer refers to a norbornene-based monomer including a norbornene ring and one or more rings condensed with the norbornene ring in the molecule. Specific examples thereof include a monomer represented by formula (3) given below: 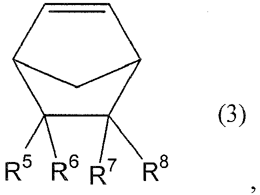 wherein each of R⁵ to R⁸ is independently a hydrogen atom; a halogen atom; a hydrocarbon group having from 1 to 20 carbon atoms which may have a substituent; or a substituent including a silicon atom, an oxygen atom, or a nitrogen atom, wherein R⁶ and R⁷ are together bonded to each other to form a ring; or
a monomer represented by formula (4) given below: 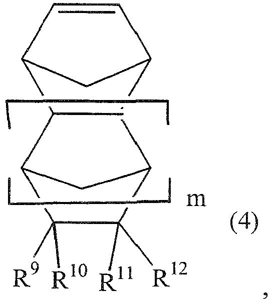 wherein each of R⁹ to R¹² is independently a hydrogen atom; a halogen atom; a hydrocarbon group having from 1 to 20 carbon atoms which may have a substituent; or a substituent including a silicon atom, an oxygen atom, or a nitrogen atom, wherein R⁹ and R¹⁰ or R¹¹ and R¹² may be bonded to each other to form a ring; and m is 1 or 2.

The monomer represented by formula (3) includes, for example, dicyclopentadiene, methyldicyclopentadiene, tricyclo[5.2.1.0^{2,6}]deca-8-ene, tetracyclo[9.2.1.0^{2,10}.0^{3,8}]tetradeca-3,5,7,12-tetraene (also referred to as 1,4-methano-1,4,4a,9a-tetrahydro-9H-fluorene), tetracyclo[10.2.1.0^{2,11}.0^{4,9}]pentadeca-4,6,8,13-tetraene (also referred to as 1,4-methano-1,4,4a,9,9a,10-hexahydroanthracene), and the like.

There are two kinds of steric isomers for the dicyclopentadienes: endo-dicyclopentadiene (formula A) and exo-dicyclopentadiene (formula B). Simply calling a dicyclopentadiene would refer to endo-dicyclopentadiene. The main component of the dicyclopentadiene, which is presently industrially available, is endo-dicyclopentadiene, and the content of the exo-dicyclopentadiene is from 0 to 2% by mass or so.

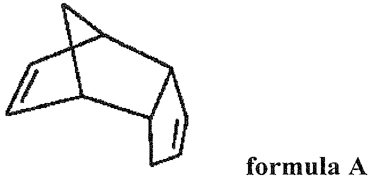

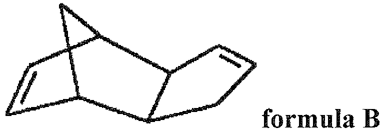

The monomer represented by formula (4) includes tricyclopentadiene, and tetracyclododecenes, wherein m is 1; and hexacycloheptadecenes, wherein m is 2.

Specific examples of the tetracyclododecenes include tetracyclododecenes which are unsubstituted or have an alkyl group, such as tetracyclododecene, 8-methyltetracyclododecene, 8-ethyltetracyclododecene, 8-cyclohexyltetracyclododecene, and 8-cyclopentyltetracyclododecene; tetracyclododecenes which have a double bond outside the ring, such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene; tetracyclododecenes which have an aromatic ring, such as 8-phenyltetracyclododecene; tetracyclododecenes which have a substituent including an oxygen atom, such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride; tetracyclododecenes which have a substituent including a nitrogen atom, such as 8-cyanotetracyclododecene and tetracyclododecene-8,9-dicarboxylic acid imide; tetracyclododecenes which have a substituent including a halogen atom, such as 8-chlorotetracyclododecene; tetracyclododecenes which have a substituent including a silicon atom, such as 8-trimethoxysilyltetracyclododecene; and the like.

Specific examples of the hexacycloheptadecenes include hexacycloheptadecenes which are unsubstituted or have an alkyl group, such as hexacycloheptadecene, 12-methylhexacycloheptadecene, 12-ethylhexacycloheptadecene, 12-cyclohexylhexacycloheptadecene, and 12-cyclopentylhexacycloheptadecene; hexacycloheptadecenes which have a double bond outside the ring, such as 12-methylidenehexacycloheptadecene, 12-ethylidenehexacycloheptadecene, 12-vinylhexacycloheptadecene, 12-propenylhexacycloheptadecene, 12-cyclohexenylhexacycloheptadecene, and 12-cyclopentenylhexacycloheptadecene; hexacycloheptadecenes which have an aromatic ring, such as 12-phenylhexacycloheptadecene; hexacycloheptadecenes which have a substituent including an oxygen atom, such as 12-methoxycarbonylhexacycloheptadecene, 12-methyl-12-methoxycarbonylhexacycloheptadecene, 12-hydroxymethylhexacycloheptadecene, 12-carboxyhexacycloheptadecene, hexacycloheptadecene-12,13-dicarboxylic acid, and hexacycloheptadecene-12,13-dicarboxylic acid anhydride; hexacycloheptadecenes which have a substituent including a nitrogen atom, such as 12-cyanohexacycloheptadecene and hexacycloheptadecene-12,13-dicarboxylic acid imide; hexacycloheptadecenes which have a substituent including a halogen atom, such as 12-chlorohexacycloheptadecene; hexacycloheptadecenes which have a substituent including a silicon atom, such as 12-trimethoxysilylhexacycloheptadecene; and the like.

These norbornene-based monomers can be used alone or in a combination of two or more kinds.

Among these norbornene-based monomers, the tricyclic or higher polycyclic norbornene-based monomers are preferred, and tricyclic, tetracyclic, or pentacyclic norbornene-based monomers are more preferred, from the viewpoint of being readily available, having excellent reactivity and obtaining a resin molded article having excellent heat resistance.

In addition, it is preferable that a cross-linkable norbornene-based monomer having two or more reactive double bonds (a norbornene-based monomer that gives a ring-opening polymer having a cross-reactive double bond), such as a symmetric cyclopentadiene trimer, is used together with another norbornene-based monomer (a norbornene-based monomer that gives a ring-opening polymer without a cross-reactive double bond), from the viewpoint of obtaining a heat-curable ring-opening polymer. It is preferable that a proportion of the cross-linkable norbornene-based monomer used in a case where the cross-linkable norbornene-based monomer is used is from 2 to 30% by mass of the entire norbornene-based monomers.

Further, a monomer which is ring-opening copolymerizable with the norbornene-based monomer may be used within the range that would not impair the object of the present invention. The monomer as mentioned above includes monocyclic cycloolefins, such as cyclobutene, cyclopentene, cyclopentadiene, cyclooctene, cyclododecene, and the like. A proportion of the monomer mentioned above used is preferably 10 parts by mass or less, and more preferably 5 parts by mass or less, based on 100 parts by mass of the norbornene-based monomer (a).

### (b) Activator

The activator of a metathesis polymerization catalyst used in the present invention (which may be hereinafter referred to as "activator (b)") is also called a co-catalyst, which is added for the purpose of enhancing polymerization activity of the metathesis polymerization catalyst.

The activator (b) is not particularly limited, and includes, for example, organoaluminum compounds. The organoaluminum compounds include alkylaluminum compounds such as triethylaluminum, triisobutylaluminum, and trioctylaluminum; alkylaluminum halide compounds such as diethylaluminum chloride, ethylaluminum dichloride, and dioctylaluminum iodide; and the like. The activator (b) can be used alone or in a mixture of two or more kinds.

### (c) Reaction Modulator

The reaction modulator in the present invention is used for the purpose of controlling the polymerization time. The reaction modulator is not particularly limited so long as an intended purpose is accomplished, and includes, for example, the following ether compound as a preferred example.

The ether compound includes an ether compound represented by the following formula (1): 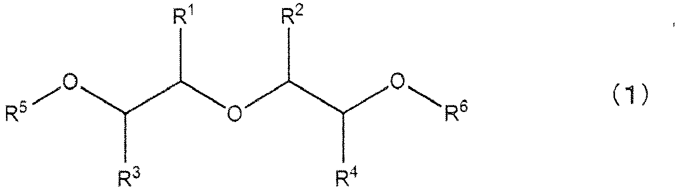 wherein, in the above formula (1), each of R¹, R², R³ and R⁴ independently stands for a hydrogen atom or an alkyl group having from 1 to 6 carbon atoms; each of R⁵ and R⁶ independently stands for an alkyl group having from 1 to 6 carbon atoms. The alkyl group having from 1 to 6 carbon atoms includes a methyl group, an ethyl group, an isopropyl group, an n-propyl group, an isobutyl group, a sec-butyl group, a t-butyl group, an n-butyl group, an n-pentyl group, and an n-hexyl group, and the like.

Specific examples of the ether compound represented by the formula (1) include a group of compounds represented by the following formulas.

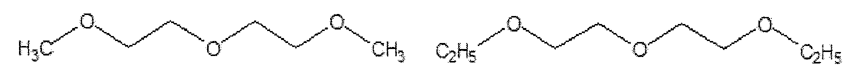

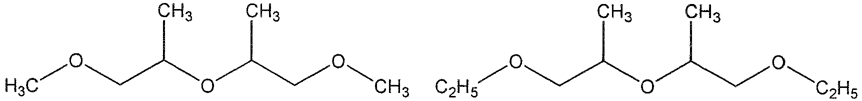

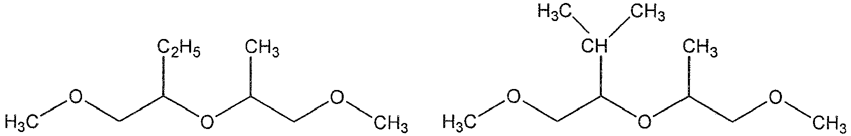

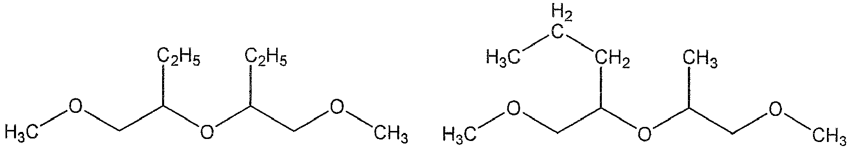

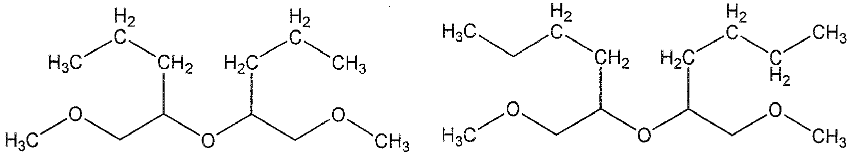

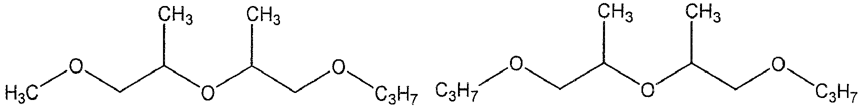

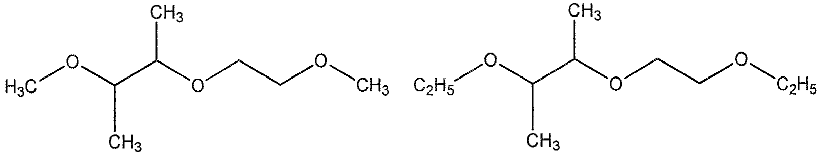

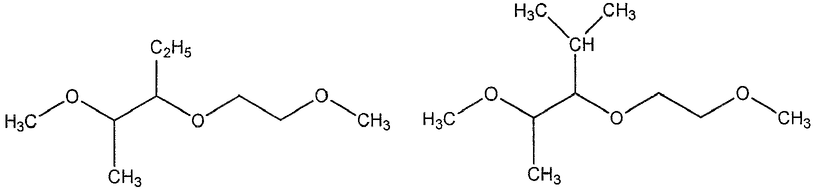

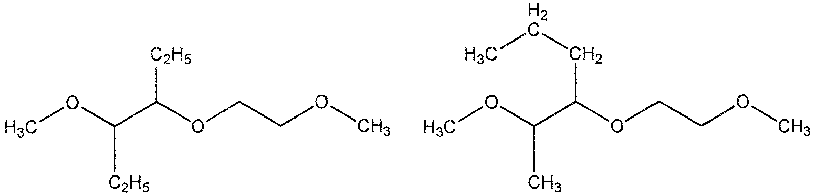

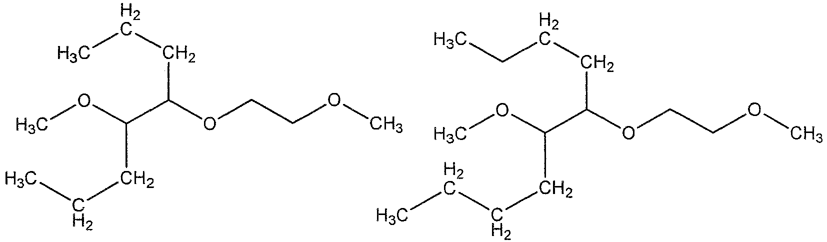

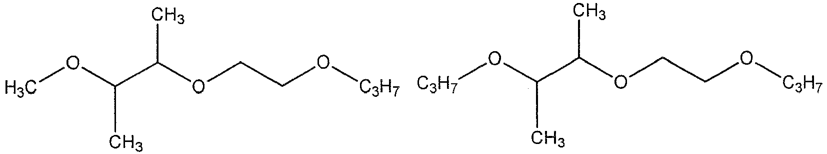

Among them, from the viewpoint of improving the effects of the present invention, the ether compound represented by the formula (1) is preferably a compound represented by the following formula (1-1): 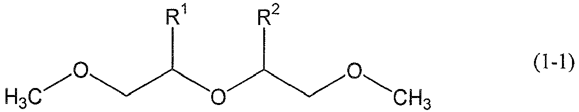 wherein R¹ and R² are as defined above.

A compound represented by formula (1-1), wherein both of R¹ and R² are hydrogen atoms or alkyl groups having from 1 to 3 carbon atoms in formula (1-1) is more preferred, and a compound represented by formula (1-1), wherein both of R¹ and R² are hydrogen atoms in formula (1-1) (diethylene glycol dimethyl ether) and a compound represented by formula (1-1), wherein both of R¹ and R² are methyl groups in formula (1-1) (dipropylene glycol dimethyl ether) are especially preferred. Among them, when dipropylene glycol dimethyl ether is blended in a liquid formulation for reaction injection molding of the present invention and used, it is preferable because a molded article having excellent surface conditions and excellent strength is obtained.

Here, an asymmetric carbon atom can be present in the ether compound represented by formula (1), and its steric configuration is not particularly limited.

The ether compound represented by the formula (1) can be all produced in accordance with a known method. In addition, as the ether compound represented by the formula (1), a commercially available product can be directly used, or can be purified as needed. The ether compound can be used alone or in a mixture of two or more kinds.

### (d) Metathesis Polymerization Catalyst Including Tungsten as Center Metal

In the present invention, as a polymerization catalyst, a metathesis polymerization catalyst including tungsten as a center metal is used (which may be hereinafter referred to as a "metathesis polymerization catalyst (d)").

The metathesis polymerization catalyst (d) is not particularly limited, so long as the catalyst includes tungsten as a center metal, and is capable of allowing ring-opening polymerization of the norbornene-based monomer. The metathesis polymerization catalyst (d) can be used alone or in a mixture of two or more kinds.

The metathesis polymerization catalyst (d) is a complex including a tungsten atom as a center atom, and plural ions, atoms, polyatomic ions and/or compounds are bonded thereto. The metathesis polymerization catalyst includes, for example, tungsten halides such as WCl₆, WCl₅, WCl₄, WCl₂, WBr₆, WBr₄, WBr₂, WF₆, WF₄, WI₆, and WI₄; tungsten oxyhalides such as WOCl₄, WOBr₄, WOF₄, WCl₂(OC₆H₅)₄, and W(OC₂H₅)₂Cl₃; metal oxides such as tungsten oxide; organotungsten compounds such as (CO)₅WC(OCH₃)(CH₃), (CO)₅WC(OC₂H₅)(CH₃), (CO)₅WC(OC₂H₅), W(OC₆H₅)₆, and W(CO)₃•(CH₃CN)₃; tungsten alkylidene compounds such as W(N-2,6-C₆H₃Prⁱ2)(CHBu^{t})(OCMe₂CF₃)₂, W(N-2,6-C₆H₃Prⁱ₂)(CHBu^{t})(OCMe₂CF₃)₂)₂), W(N-2,6-C₆H₃Prⁱ₂)(CHCMe₂Ph)(OBu^{t})₂, W(N-2,6-C₆H₃Prⁱ₂)(CHCMe₂Ph)(OCMe₂CF₃)₂, and W(N-2,6-C₆H₃Prⁱ₂)(CHCMe₂Ph)(OCMe₂CF₃)₂)₂), wherein Prⁱ is an i-propyl group, Bu^{t} is a t-butyl group, Me is a methyl group, and Ph is a phenyl group; and the like.

Among them, the tungsten halides and the tungsten oxyhalides are preferred, and more specifically WCl₆ and WOCl₄ are more preferred.

### (e) Elastomer

The elastomer (which may be hereinafter referred to as "elastomer (e)"), when added to a liquid formulation for reaction injection molding of the present invention, gives fluidity, and when using the liquid formulation, a molded article with reduced sink marks is obtained. As the elastomer, an elastomer having a shear rate coefficient of from 1.30 to 1.60 is preferred. Here, the shear rate coefficient is a numerical value obtained by a method described in Patent Publication 1 mentioned above.

The elastomer includes natural rubbers, polybutadiene, polyisoprene, styrene-butadiene copolymers (SBR), ethylene-propylene copolymers, styrene-butadiene-styrene block copolymers (SBS), styreneisoprene-styrene copolymers (SIS), ethylene-propylene-diene terpolymers (EPDM), ethylene-vinyl acetate copolymers (EVA) and hydrogenated products thereof, and the like.

### (f) Other Components

The liquid formulation for reaction injection molding of the present invention may be blended with other components (which may be hereinafter referred to as "other components (f)") as desired, in order to more efficiently manufacture a resin molded article, or in order to improve or maintain the properties of the resin molded article. The other components (f) may be added to a liquid formulation containing a metathesis polymerization catalyst (d), the liquid formulation which is used in combination with the liquid formulation for reaction injection molding of the present invention in RIM method, so long as the other components (f) would not inhibit the effects of the present invention.

Other components (f) include polymerization promoters, fillers, reinforcing materials, antioxidants, thermal stabilizers, photo-stabilizers, ultraviolet absorbents, pigments, colorants, blowing agents, antistatic agents, flame retardants, lubricants, softening agents, tackifying agents, plasticizers, mold-releasing agents, deodorants, perfume, dicyclopentadiene-based heat-polymerization resin and hydrogenated compounds thereof, and the like.

The polymerization promoter is added in order to improve a polymerization conversion rate of the monomers. As the polymerization promoter, a chlorine atom-containing compound is preferred, and an organic chlorine compounds and silicon chloride compounds are more preferred. Specific examples include 2-chlorobenzotrichloride, 2,4-dichlorobenzotrichloride, hexachloro-p-xylene, 2,4-dichlorotrichlorotoluene, and silicon tetrachloride, and the like.

When a polymerization promoter is used, it is preferable that the amount thereof would be usually from 10 mass ppm to 10% by mass of the overall reactive liquid mixture.

The filler is not particularly limited, and a fibrous filler having an aspect ratio of usually from 5 to 100, and preferably from 10 to 50, and an inorganic filler made of a particulate filler having an aspect ratio of usually from 1 to 2, and preferably from 1 to 1.5 are preferred. Here, the aspect ratio of the filler refers to a ratio of the average length diameter to a 50% volume cumulative diameter of the filler. The average length diameter as used herein is a number-average length diameter obtained by measuring length diameters of 100 fillers randomly selected with an optical photomicrograph, and calculating an arithmetic means thereof. In addition, the 50% volume cumulative diameter is a value obtained by measuring the particle size distribution according to X-ray permeation method.

When a filler is used, the amount of the filler used is preferably from 5 to 55 parts by mass, and more preferably from 10 to 45 parts by mass, based on 100 parts by mass of a total amount of the monomer (a) and the metathesis polymerization catalyst (d). When the amount of the filler is exceedingly large, there are some risks that the reactive liquid mixture is precipitated in the tank or the pipe when injected into a mold, or the injection nozzles are clogged. On the other hand, when the amount of the filler is too small, there are some cases where rigidity or dimensional stability of the molded articles obtained is insufficient.

The method for adding the other component can be appropriately selected depending upon the kinds of the additives and the like.

### 2) Gelation Promoting Agent

The gelation promoting agent of the present invention consists essentially of a mixture of only two components of an activator of a metathesis polymerization catalyst including tungsten as a center metal and a norbornene-based monomer, and the gelation promoting agent has an action of promoting the gelation due to polymerization of a norbornene-based monomer in the presence of the above catalyst. Here, "essentially of a mixture of only two components" means that only two components of an activator and a norbornene-based monomer mentioned above are mixed, and that the two components of an activator and a norbornene-based monomer mentioned above are mixed in the presence of a component not substantially influencing the action of the gelation promoting agent of the present invention (which may be hereinafter referred to as an optional component). The gelation promoting agent of the present invention is added to a composition containing a monomer for reaction injection molding, whereby the composition can shorten the gelation time upon contacting a metathesis polymerization catalyst.

The activator of a metathesis polymerization catalyst including tungsten as a center metal as used herein includes an activator (b) as mentioned above. The norbornene-based monomer as used herein includes a monomer (a) as mentioned above.

A mixing proportion of the monomer (a) to the activator (b) in the gelation promoting agent is such that the monomer (a) is preferably within the range of from 1 to 1,000 mol, more preferably within the range of from 2 to 500 mol, and even more preferably within the range of from 3 to 100 mol, based on one mol of the activator (b). The monomer (a) is preferably 1 mol or more, from the viewpoint of enhancing storage stability of the gelation promoting agent, and the monomer (a) is preferably 1,000 mol or less, from the viewpoint of maintaining the excellent effects of promoting gelation.

The above optional component includes, for example, nonpolar components, the above elastomer (e), and those listed as the other components (f), such as fillers, reinforcing materials, pigments, colorants, blowing agents, flame retardants, tackifying agents, plasticizers, mold-releasing agents, deodorants, perfume, dicyclopentadiene-based heat-polymerization resin and hydrogenated compounds thereof. When the gelation promoting agent is composed of the monomer (a) and the activator (b), the proportion occupied by both the components in the gelation promoting agent is 100% by mass, or when an optional component other than the two components is contained in the gelation promoting agent, the content of these components is preferably from 5 to 55 parts by mass, and more preferably from 10 to 45 parts by mass, based on 100 parts by mass of a total of the monomer (a) and the activator (b).

Here, the optional component can be blended to the gelation promoting agent by concurrently mixing an optional component upon mixing the two components, the monomer (a) and the activator (b), or by firstly mixing only the two components, the monomer (a) and the activator (b), and thereafter mixing an optional component therewith. The temperature during mixing is not particularly limited, and a temperature within the range of from 0° to 80°C is preferred.

### 3) Liquid Formulation for Reaction Injection Molding

The liquid formulation for reaction injection molding of the present invention is a liquid formulation for reaction injection molding used in the polymerization of a norbornene-based monomer in the presence of a metathesis polymerization catalyst including tungsten as a center metal, wherein the liquid formulation contains a gelation promoting agent as mentioned above of the present invention.

As mentioned above, in general, according to RIM method, a liquid formulation 1 containing an activator of a metathesis polymerization catalyst and a metathesis polymerizable monomer is used in combination with a liquid formulation 2 containing a metathesis polymerization catalyst and a metathesis polymerizable monomer. Since the liquid formulation for reaction injection molding of the present invention contains the above activator, the liquid formulation of the present invention is suitably used as the above liquid formulation 1 without containing a metathesis polymerization catalyst.

The content proportion of the gelation promoting agent occupying the liquid formulation for reaction injection molding is preferably from 0.01 to 20% by mass, more preferably from 0.05 to 10% by mass, and even more preferably from 0.1 to 5% by mass. The content proportion is preferably 0.01% by mass or more, from the viewpoint of exhibiting excellent effects of promoting gelation, and the content proportion is preferably 20% by mass or less, when production efficiency is taken into consideration.

The liquid formulation for reaction injection molding of the present invention may contain components other than the gelation promoting agent, for example, one or more components selected from the group consisting of a monomer (a) added separately from the gelation promoting agent, an activator (b) added separately from the gelation promoting agent, a reaction modulator, and an elastomer (e).

When a monomer (a) added separately from the gelation promoting agent is added to a liquid formulation for reaction injection molding, the proportion of the monomer (a) is preferably from 60 to 99.9% by mass, more preferably from 70 to 99.7% by mass, and even more preferably from 70 to 99.5% by mass, of the liquid formulation for reaction injection molding. The proportion of the monomer is preferably 60% by mass or more, from the viewpoint of improving strength of the molded article, and the proportion of the monomer is preferably 99.9% by mass or less, from the viewpoint of maintaining quality of the liquid formulation.

When an activator (b) separately added from the gelation promoting agent is added to a liquid formulation for reaction injection molding, the proportion of the activator (b) is preferably from 0.02 to 10% by mass, more preferably from 0.05 to 8% by mass, and even more preferably from 0.08 to 5% by mass, of the liquid formulation for reaction injection molding. The proportion of the activator is preferably 0.02% by mass or more, from the viewpoint of promoting polymerization activity and enhancing the reaction efficiency, and the proportion of the activator is preferably 10% by mass or less, from the viewpoint of reaction control.

When a reaction modulator is added to a liquid formulation for reaction injection molding, the proportion of the reaction modulator is preferably from 0.01 to 20% by mass, more preferably from 0.05 to 10% by mass, and even more preferably from 0.1 to 5% by mass, of the liquid formulation for reaction injection molding. The reaction modulator is preferably in an amount of 0.01% by mass or more, in order to exhibit the desired effects as the reaction modulator, and the reaction modulator is in an amount of preferably 20% by mass or less, from the viewpoint of maintaining quality of the molded article.

When an elastomer (e) is added to a liquid formulation for reaction injection molding, the proportion of the elastomer (e) is preferably from 0.5 to 20% by mass, more preferably from 1 to 15% by mass, and even more preferably from 2 to 10% by mass, of the liquid formulation for reaction injection molding. The elastomer is in an amount of preferably 0.5% by mass or more, from the viewpoint of giving viscosity to the liquid formulation, and the elastomer is in an amount of preferably 20% by mass or less, when production efficiency is taken into consideration.

The liquid formulation for reaction injection molding of the present invention has the gelation time when mixed with a metathesis polymerization catalyst (d), as measured by a method described in Examples, of preferably 2 seconds or more, more preferably from 2 to 360 seconds, and even more preferably from 5 to 300 seconds, from the viewpoint of preventing the quality of the molded article obtained from lowering.

### 4) Reactive Liquid Mixture

The reactive liquid mixture in the present invention is prepared by mixing a liquid formulation for reaction injection molding of the present invention mentioned above or constituents of the liquid formulation, and a liquid formulation containing a metathesis polymerization catalyst including tungsten as a center metal. The metathesis polymerization catalyst used herein includes a metathesis polymerization catalyst (d) mentioned above.

In the present specification, the amount of the metathesis polymerization catalyst (d) in the liquid formulation containing the metathesis polymerization catalyst (d) is preferably from 0.01 to 50 mmol/kg, and more preferably from 0.1 to 20 mmol/kg.

It is preferable that a metathesis polymerization catalyst (d) is used after previously suspending in an inert solvent such as benzene, toluene and chlorobenzene, and adding a small amount of an alcoholic compound and/or a phenolic compound to solubilize. The alcoholic compound to be used herein includes ethanol, 1-propanol, 2-propanol, 1-butanol, 2-butanol, t-butanol, and the like. In addition, the phenolic compound to be used includes t-butylphenol, t-octylphenol, nonylphenol, dodecylphenol, and the like.

Here, there are some cases in which unwanted polymerization can be prevented when a Lewis base or a chelating agent is added in an amount of preferably from about 1 to about 5 mol, based on one mol of the metathesis polymerization catalyst (d). The Lewis base and the chelating agent include acetyl acetone, alkyl acetoacetates, tetrahydrofuran, and benzonitrile, and the like.

The liquid formulation containing a metathesis polymerization catalyst (d) may further contain a monomer (a). In this case, it is preferred because homogeneity of a reactive liquid mixture obtained is improved. The amount of the monomer (a) is preferably from 60 to 99.9% by mass, and more preferably from 80 to 99.5% by mass, of the liquid formulation.

Specific embodiments for preparing a reactive liquid mixture include, for example, an embodiment of mixing a liquid formulation for reaction injection molding of the present invention and a liquid formulation containing a metathesis polymerization catalyst (d) (mixing of the two component system), or alternatively, an embodiment of concurrently mixing
a liquid formulation A containing a monomer (a) and the above reaction modulator,
a liquid formulation B containing a metathesis polymerization catalyst (d), and
a gelation promoting agent of the present invention (mixing of the three component system). Here, the above liquid formulation A may contain the above activator, but does not contain a gelation promoting agent of the present invention.

### 4.1) Mixing of Two Component System

The liquid formulation for reaction injection molding and the liquid formulation containing a metathesis polymerization catalyst (d) are each prepared in separate containers. When a reaction injection molded article is manufactured, each of the raw material components for both liquid formulations is mixed, for example, in a collision mixer apparatus, and these raw material components are injected into a mold and used in the form of a reactive liquid mixture.

When both the liquid formulations are mixed, a mixing proportion of a liquid formulation for reaction injection molding and a liquid formulation containing a monomer (a) and a metathesis polymerization catalyst (d) is not particularly limited, and, for example, a liquid formulation containing a monomer (a) and a metathesis polymerization catalyst (d) is in an amount of preferably from 0.1 to 10 parts by mass, more preferably from 0.3 to 5 parts by mass, and even more preferably from 0.5 to 2 parts by mass, based on 1 part by mass of the liquid formulation for reaction injection molding. The liquid formulation containing a monomer (a) and a metathesis polymerization catalyst (d) is in an amount of preferably 0.1 parts by mass or more, from the viewpoint of obtaining sufficient polymerization activity, and the liquid formulation is in an amount of preferably 10 parts by mass or less, from the viewpoint of maintenance of quality and production efficiency of the molded article.

### 4.2) Mixing of Three Component System

In a case where a reactive liquid mixture is prepared by concurrently mixing
a liquid formulation for reaction injection molding,
a liquid formulation containing a metathesis polymerization catalyst (d), and
a gelation promoting agent of the present invention as mentioned above,
the three components are each prepared in separate vessels. When a reaction injection-molded article is manufactured, each of the raw material components for the three components is mixed in a collision mixing apparatus, and these raw material components are injected into a mold and used in the form of a reactive liquid mixture.

When the three components are mixed, a mixing proportion of a liquid formulation for reaction injection molding, a liquid formulation containing a metathesis polymerization catalyst (d), and a gelation promoting agent of the present invention, as mentioned above, is not particularly limited. For example, it is preferable that the liquid formulation containing a metathesis polymerization catalyst (d) is in an amount of from 0.1 to 10 parts by mass, and that the promoter is in an amount of from 0.01 to 20 parts by mass, it is more preferable that the liquid formulation containing a metathesis polymerization catalyst (d) is in an amount of from 0.3 to 5 parts by mass, and that the promoter is in an amount of from 0.05 to 10 parts by mass, and it is even more preferable that the liquid formulation containing a metathesis polymerization catalyst (d) is in an amount of from 0.5 to 2 parts by mass, and that the promoter is in an amount of from 0.1 to 5 parts by mass, based on one part by mass of the liquid formulation for reaction injection molding. The liquid formulation containing a metathesis polymerization catalyst (d) is preferably in an amount of 0.1 parts by mass or more, from the viewpoint of obtaining sufficient polymerization activity, and the liquid formulation containing a metathesis polymerization catalyst (d) is preferably in amount of 10 parts by mass or less, from the viewpoint of maintaining quality of the molded article. The promoter is preferably in an amount of 0.01 parts by mass or more, from the viewpoint of the effects of promoting gelation, and the promoter is preferably in an amount of 20 parts by mass or less, from the viewpoint of preventing the lowering of quality of the molded article.

The concentration of the monomer (a) is preferably from 60 to 99.9% by mass, more preferably from 70 to 99.7% by mass, and even more preferably 80 to 99.5% by mass, of the liquid formulation for reaction injection molding used in this embodiment. The concentration of the activator (b) is preferably from 0.02 to 10% by mass, more preferably from 0.05 to 8% by mass, and even more preferably from 0.08 to 5% by mass. The concentration of the above reaction modulator is preferably from 0.01 to 20% by mass, more preferably from 0.05 to 10% by mass, and even more preferably from 0.1 to 5% by mass.

### 5) Method for Manufacturing Reaction Injection-Molded Article

The method for manufacturing a reaction injection-molded article of the present invention has a feature that the method includes the step of subjecting a reactive liquid mixture mentioned above to bulk polymerization in a mold, thereby carrying out reaction injection molding.

The apparatus for reaction injection molding (RIM) is not particularly limited, and a known collision mixing apparatus can be used. Here, a dynamic mixer or a low-pressure injection machine such as a static mixer can be used in place of the collision mixing apparatus.

The temperature of each of the raw material components before supplying to an apparatus for reaction injection molding is preferably from 10° to 60°C, and the viscosity of each of the raw material components is, for example, preferably from 5 to 3,000 mPa•s or so, and more preferably from 50 to 1,000 mPa•s or so, at 30°C.

The mold used in the reaction injection molding is not particularly limited, and usually a mold formed by a core mold and a cavity mold is used. The material of the mold is not particularly limited, and includes metals such as steel, aluminum, zinc alloys, nickel, copper, and chromium, and resins and the like. In addition, these molds may be manufactured by any of methods such as casting, forging, metallizing, and electroforming, or those that are plated may be also used.

The structure of the mold may be determined by considering the pressure upon injecting a reactive liquid mixture into a mold. In addition, the mold clamping pressure of the mold is preferably a gauge pressure of from 0.1 to 9.8 MPa or so.

The molding time, which may depend upon the kinds and amounts of the norbornene-based monomer used, the mold temperature, and the like, is preferably from 5 seconds to 6 minutes, and more preferably from 10 seconds to 5 minutes.

For example, in a case where bulk polymerization is carried out by using a pair of molds of a core mold and a cavity mold, and supplying a reactive liquid mixture in the cavities formed by these molds, in general, it is preferable that a mold temperature T1 (°C) of the mold at a design surface is set higher than a mold temperature T2 (°C) at a side opposing to the design surface. By setting the mold temperatures as such, the surface of the molded article can be made into beautiful external appearance without sink marks or bubbles.

A temperature difference T1 - T2 may be 0°C or more, and is preferably 5°C or more, and more preferably 10°C or more, and the upper limit is preferably 60°C or less. A temperature T1 is preferably 110°C or lower, and more preferably 95°C or lower, and the lower limit is preferably 50°C or higher. A temperature T2 is preferably 90°C or lower, more preferably 70°C or lower, and even more preferably 60°C or lower, and the lower limit is preferably 30°C or higher.

A method for adjusting a mold temperature includes, for example, a method of adjusting a mold temperature with a heater, a temperature-adjustment method with a heating medium such as temperature-controlled water or oil, circulated in a pipe embedded in the internal of a mold, and the like.

In addition, for example, after a molded article is obtained as mentioned above, by referring to Japanese Patent Laid-Open No. 2007-313395, an in-mold coating method including injecting a coating agent into a space formed by the molded article and a mold from an a coating agent injection inlet separately provided in the mold, to form a coating agent layer on a surface of the molded article may be subsequently carried out as desired.

After the termination of bulk polymerization (or when in-mold coating method is carried out, after the in-mold coating method), a mold is subjected to mold opening to demold, whereby a reaction injection-molded article can be obtained.

### 6) Reaction Injection-Molded Article

The reaction injection-molded article of the present invention is obtained according to "the method for manufacturing a reaction injection-molded article" of the present invention, mentioned above. The reaction injection-molded article of the present invention can be manufactured efficiently on an industrial manufacturing scale by using a gelation promoting agent of the present invention or a liquid formulation for reaction injection molding of the present invention.

The reaction injection-molded article of the present invention can be directly immediately used, or a plating and/or painting may be provided in accordance with a known method as desired, in order to improve or maintain the properties of a molded article.

Since the reaction injection-molded article of the present invention has excellent surface conditions of the molded article and high mechanical strength, the reaction injection-molded article can be suitably used in automobile applications such as bumpers and air deflectors; construction and industrial machinery applications such as wheel loaders and power shovels; recreational applications such as golf carts and arcade game machines; medical applications such as medical instruments; industrial applications such as large-scaled panels and chairs; house facility applications such as shower pans and washbowls; and the like.

### EXAMPLES

The present invention will be hereinbelow described by means of Examples, without intending to limit the present invention to these Examples. Here, unless specified otherwise, "parts" and "%" are on mass basis.

In the following Examples and the like, each of the properties was measured in accordance with the method shown hereinbelow.

### (Gelation Time)

A 50 mL container containing a stirring bar and subjected to nitrogen replacement was maintained at 30°C. To the container, 10 mL of a liquid formulation (B) at 30°C which was previously nitrogen-replaced was injected, and the contents were stirred with a magnetic stirrer at a rotational speed of 1,000 rpm. Next, 10 mL of a liquid formulation (A) at 30°C which was previously nitrogen-replaced was injected to the above container, and stirred for 5 seconds, to mix with the liquid formulation (B). By mixing as mentioned above, the liquid formulation (A) and the liquid formulation (B) were reacted to start the polymerization. An increase in viscosities of the liquid mixture accompanying the polymerization was measured with a B-type viscometer which was placed in the above container. The time from a point of the start of mixing of a liquid formulation (A) and a liquid formulation (B) to a point where a viscosity of a liquid mixture is shown to be 1,000 mPa•s was defined as "gelation time."

### (Curing Time)

A 50 mL container containing a stirring bar and subjected to nitrogen replacement was maintained at 30°C. To the container, 10 mL of a liquid formulation (B) at 30°C which was previously nitrogen-replaced was injected, and the contents were stirred with a magnetic stirrer at a rotational speed of 1,000 rpm. Next, 10 mL of a liquid formulation (A) at 30°C which was previously nitrogen-replaced was injected to the above container, and stirred for 5 seconds, to mix with the liquid formulation (B). By mixing as mentioned above, the liquid formulation (A) and the liquid formulation (B) were reacted to start the polymerization. White smokes generated along with the progress of the polymerization were visually confirmed, and a time period of from a time point at the start of mixing the liquid formulation (A) and the liquid formulation (B) to the generation of white smokes was defined as "curing time."

### (Flexural Strength)

The flexural strength of a molded article was measured under the condition of a measurement temperature of 23 °C, as prescribed in JIS K7171.

### (Flexural Modulus)

The flexural modulus of a molded article was measured under the condition of a testing speed of 2 mm/minute, as prescribed in JIS K7171.

### (Tackiness of Core Side of Molded Article)

After the manufacture of a molded article, in a case where liquid droplets of unreacted monomers and the like were confirmed on a core side of the molded article immediately after taking out from a mold, such a case was considered as "having tackiness."

The manufacture of a molded article was repeated 10 times, and any ten locations of areas of 10 mm × 10 mm on the core surface of the molded article finally produced were then visually evaluated for tackiness in accordance with the following evaluation criteria.

### [Evaluation Criteria]

Excellent: No liquid droplets are found in an entire area.
Good: Tackiness is found in one or more and 2 or less areas.
Fair: Tackiness is found in 3 or more and 5 or less areas.
Poor: Tackiness is found in 6 or more areas.

### (Evaluation of Residual Resin on Mold Surface)

The manufacture of a molded article was repeated 10 times, and the mold was then cooled, and any ten locations of areas of 10 mm × 10 mm on the mold surfaces were observed with expanding 10 folds with an optical microscope, and the residual resin on the mold surface was evaluated in accordance with the following evaluation criteria.

### [Evaluation Criteria]

Excellent: No residual resins are found in an entire area.
Good: Residual resins are found in one or more and 2 or less areas.
Fair: Residual resins are found in 3 or more and 5 or less areas.
Poor: Residual resins are found in 6 or more areas.

### (Residual Bubbles on Surface of Manufactured Article)

The manufacture of a molded article was repeated 10 times, and any ten locations of areas of 10 mm × 10 mm on the side of the manufactured article (molded article) finally produced were then observed with expanding 10 folds with an optical microscope, and the residual bubbles were evaluated in accordance with the following evaluation criteria.

### [Evaluation Criteria]

Excellent: No bubbles were found in an entire area.
Good: Bubbles were confirmed in one or more and 3 or less areas.
Fair: Bubbles were confirmed in 4 or more and 6 or less areas.
Poor: Bubbles were confirmed in 7 or more and 10 or less areas.

### Example 1 [Preparation of Gelation Promoting Agent]

Dicyclopentadiene (DCPD) and triethylaluminum (TEAL) were mixed so that both components were in a molar ratio (DCPD:TEAL) of 5:1, to prepare a gelation promoting agent upon polymerizing the norbornene-based monomer.

### Manufacturing Example 1 [Preparation of Activator Liquid Mixture]

A reaction modulator diethylene glycol dimethyl ether (DG) and DCPD were mixed, and TEAL was added to a mixture obtained, and further mixed, to prepare an activator liquid mixture 1. Here, a molar ratio of DG, DCPD and TEAL during mixing (DG:DCPD:TEAL) was 2:5:1.

### Example 2 [Preparation of Liquid Formulation for Reaction Injection Molding (Liquid Formulation (X))]

The amount 4.1 parts of an ethylene-propylene copolymer [propylene units: 89%, ethylene units: 11%] was added to a mixture of norbornene-based monomers composed of 90 parts of DCPD and 10 parts of tricyclopentadiene, and mixed. Next, the above activator liquid mixture 1 was added thereto so as to give a finally obtained liquid formulation (so that X had a TEAL concentration of 22 mmol/kg (0.25%)), and mixed. Further, the above gelation promoting agent was added thereto so that the gelation promoting agent had a concentration of 1% of the finally obtained liquid formulation (X), and mixed, to give a liquid formulation (X).

### Manufacturing Example 2 [Preparation of Liquid Formulation Containing Metathesis Polymerization Catalyst (Liquid Formulation (Y))]

Seventeen parts of tungsten hexachloride as a metathesis polymerization catalyst, 1 part of t-butanol, 14 parts of dodecylphenol, and 9 parts of acetyl acetone were mixed in toluene, to prepare a metathesis polymerization catalyst solution having a tungsten concentration of 11%.

Next, 4.1 parts of the above ethylene-propylene copolymer were dissolved in the mixture of the norbornene-based monomers. To this solution was further added a metathesis polymerization catalyst solution mentioned above so that a metathesis polymerization catalyst had a concentration of 7.6 mmol/kg, and mixed, to give a liquid formulation (Y).

Comparative Example 1 [Preparation of Liquid Formulation for Reaction Injection Molding (Liquid Formulation (X'))]

The same procedures as in Example 2 were carried out except for not adding a gelation promoting agent, to prepare a liquid formulation (X').

### Test Example 1

The gelation time was measured in accordance with the method described above, using the liquid formulation (X) and the liquid formulation (Y), or the liquid formulation (X') and the liquid formulation (Y) mentioned above. The results are shown in Table 1.

### Test Example 2

Further, a reaction injection-molded article was manufactured in the following manner, using the liquid formulation (X) and the liquid formulation (Y), or the liquid formulation (X') and the liquid formulation (Y) mentioned above.

A mold for reaction injection molding made of two aluminum plates capable of forming a cavity of length 245 mm × width 210 mm × thickness 3 mm in an internal thereof was furnished, and heated to 90°C. Here, this mold for reaction injection molding has a structure of having an injection pore for a liquid formulation for reaction injection molding on one side of the aluminum plates.

The liquid formulation (X) and the liquid formulation (Y), or the liquid formulation (X') and the liquid formulation (Y) mentioned above were furnished, and a temperature was each set at 30°C.

While mixing the liquid formulation (X) and the liquid formulation (Y) in a proportion of 1:1 (mass ratio) with a static mixer, the liquid mixture was injected into a mold for reaction injection molding from injection pores, and subjected to a bulk polymerization for 120 seconds, and the mold was subjected to mold opening to allow demolding, thereby giving a molded article 1 made of a norbornene-based resin that was polymerized and cured. The same procedures were carried out for the liquid formulation (X') and the liquid formulation (Y), to give a molded article 2. In each of the molded article 1 and the molded article 2, the manufacture of molded articles was carried out 10 times. All the molded articles (norbornene-based resins) had a specific gravity of 1.04, and a glass transition temperature (Tg) measured according to the DSC method of 145°C.

The curing time for the molded article 1 and the molded article 2 was measured as described above, an average of 10 measurements was obtained, and a first decimal place was rounded off to a nearest digit, to give curing time (seconds). The results are shown in Table 1.

Next, the measurements for flexural strength and flexural modulus were carried out for any five out of ten of the molded article 1 obtained above, and for any five out of ten of the molded article 2 obtained above, and an average thereof was obtained. The molded articles finally obtained after the 10-time manufacturing procedure was evaluated for tackiness and residual bubbles in the manner as described above. Further, the mold used in the above method was evaluated for the residual resin on the surface of the mold after the 10-time manufacturing procedure in accordance with the above method. The results are shown in Table 1.

### [Table 1]

**Table 1**

| | Molded Article 1 | Molded Article 2 |
|---|---|---|
| Liquid Formulation for Reaction Injection Molding | Example 2 | Comparative Example 1 |
| | [Liquid Formulation (X)] | [Liquid Formulation (X')] |
| Amount of Gelation Promoting Agent in Liquid Formulation (X) or Liquid Formulation (X') (%) | 1 | 0 |
| Gelation Time (seconds) | 10 | 16 |
| Curing Time (seconds) | 60 | 60 |
| Flexural Strength (Mpa) | 76 | 75 |
| Flexural Modulus (Gpa) | 1.8 | 1.8 |
| Tackiness of Core Side of Molded Article | Good | Fair |
| Residual Resins on Surface of Mold | Excellent | Good |
| Residual Bubbles on Surface of Manufactured Article | Good | Poor |

It can be seen from Table 1 that since a gelation promoting agent is added, the gelation time of the reactive liquid mixture can be shortened from 16 seconds to 10 seconds, whereby consequently tackiness on a core side of the molded article is reduced, and residual resins on the surface of a mold (mold stains) or residual bubbles on the surface of the manufactured article can be reduced, while maintaining mechanical strength such as flexural strength of the molded article.

Here, even when the above liquid formulation (X') was used, in a case where the liquid formulation (X'), the above liquid formulation (Y) and the above gelation promoting agent were concurrently mixed in the above blending amounts, similar results to a case where the above liquid formulation (X) and the above liquid formulation (Y) were mixed were obtained.

### INDUSTRIAL APPLICABILITY

The gelation promoting agent, the liquid formulation for reaction injection molding, and the method for manufacturing a reaction injection-molded article of the present invention can be suitably used in the field of manufacture of reaction injection-molded articles. Further, the reaction injection-molded article of the present invention has excellent mechanical properties and excellent finishing of surface of the manufactured articles, so that the reaction injection-molded article can be suitably used in applications of automobile parts, parts of housing facilities, and the like.

## Claims

1. A gelation promoting agent for promoting gelation due to polymerization of a norbornene-based monomer in the presence of a metathesis polymerization catalyst comprising tungsten as a center metal, wherein the gelation promoting agent consists essentially of a mixture of only two components of an activator of the metathesis polymerization catalyst and the norbornene-based monomer.

2. The gelation promoting agent according to claim 1, wherein a mixing proportion of said activator and said norbornene-based monomer is within the range of from 1 to 1,000 mol of the norbornene-based monomer per one mol of the activator.

3. A liquid formulation for reaction injection molding for polymerizing a norbornene-based monomer in the presence of a metathesis polymerization catalyst comprising tungsten as a center metal, wherein the liquid formulation for reaction injection molding comprises a gelation promoting agent as defined in claim 1 or 2.

4. The liquid formulation for reaction injection molding according to claim 3, wherein a gelation time when mixed with the metathesis polymerization catalyst comprising tungsten as a center atom is 2 seconds or longer.

5. A method for manufacturing a reaction injection-molded article, comprising the step of subjecting a reactive liquid mixture obtained by mixing a liquid formulation for reaction injection molding as defined in claim 3 or 4, with a liquid formulation comprising a metathesis polymerization catalyst comprising tungsten as a center metal to bulk polymerization in a mold, thereby carrying out reaction injection molding.

6. The method according to claim 5, wherein said liquid formulation comprising the metathesis polymerization catalyst comprising tungsten as a center atom further comprises a norbornene-based monomer.

7. A method for manufacturing a reaction injection-molded article, comprising the step of subjecting a reactive liquid mixture obtained by concurrently mixing
a liquid formulation A comprising a norbornene-based monomer and a reaction modulator,
a liquid formulation B comprising a metathesis polymerization catalyst comprising tungsten as a center metal, and
a gelation promoting agent as defined in claim 1 or 2 to bulk polymerization in a mold, thereby carrying out reaction injection molding.

8. A reaction injection-molded article obtained by the method as defined in any one of claims 5 to 7.
